# EUROPEAN PATENT SPECIFICATION

(11) **EP 2 584 007 B1**
(45) Date of publication and mention of the grant of the patent: **04.06.2014**
(21) Application number: 11008493.6
(22) Date of filing: 22.10.2011
(51) Int. Cl.: C09B 35/378

(54) **Trisazo acid dyes based on pyridones**
Saure Trisazo-Farbstoffe auf Basis von Pyridonen
Colorants d'acides trisazo à base de pyridones

(43) Date of publication of application: 24.04.2013
(73) Proprietor: Clariant International Ltd., 4132 Muttenz 1 (CH)
(72) Inventor: Nusser, Rainer, Dr., 79395 Neuenburg (DE); Hasemann, Ludwig, Dr., 79379 Muellheim-Niederweiler (DE)
(74) Representative: Ricker, Mathias

(56) References cited:
- EP-A1- 0 955 342
- EP-A1- 2 258 685
- JP-A- 5 032 906

## Description

The invention relates to novel acid dyes, a process for their preparation and their use for dyeing organic substrates.

Acid dyes are known and dyes with bridging members are known as well. However, there is still a need for acid dyes with improved properties.

According to the invention there are provided compounds of formula (I) 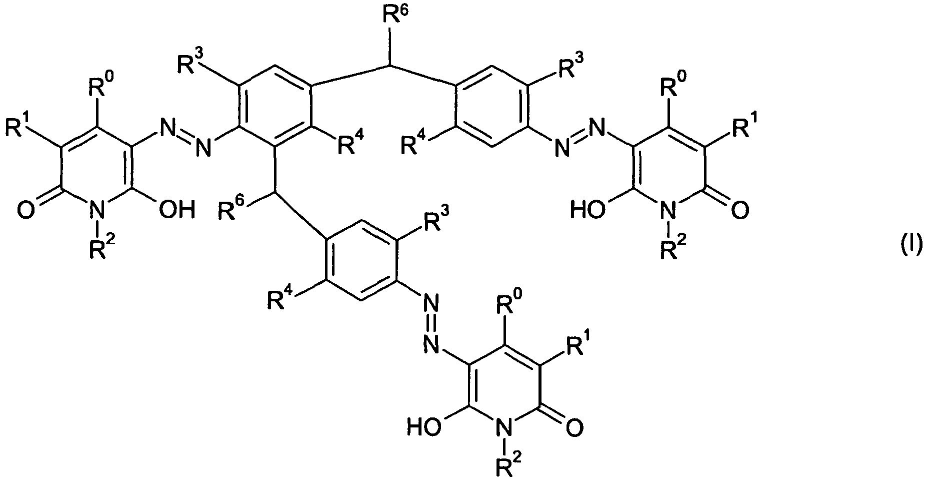 wherein
- R⁰: signifies a substituted C₁ to C₄ alkyl group or an unsubstituted C₁ to C₄ alkyl group,
- R¹: signifies H, a substituted C₁ to C₄ alkyl group or an unsubstituted C₁ to C₄ alkyl group, a sulpho group, a C₁ to C₄ alkylene-sulpho group, -CO-NH₂, -CO-NH-(C₁ to C₄ alkyl) or CN,
- R²: signifies H, a substituted C₁ to C₄ alkyl group or an unsubstituted C₁ to C₄ alkyl group,
- R³: signifies H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group,
- R⁴: signifies H, a substituted C₁ to C₄ alkyl group or an unsubstituted C₁ to C₄ alkyl group, a substituted C₁ to C₄ alkoxy group or an unsubstituted C₁ to C₄ alkoxy group,
- R⁶: signifies a substituted C₁ to C₉ alkyl group or an unsubstituted C₁ to C₉ alkyl group, an unsubstituted aryl group or a substituted aryl group,

wherein the compounds of formula (I) bear at least one anionic substituent.

The preferred compounds of formula (I) bear 1 or 2 or 3 anionic substituents, of which 3 anionic substituents are particularly preferred.

The at least one anionic substituent in the compounds of formula (I) are located by preference in one of the substituents R¹ and/or R³, more preferred the at least one anionic substituent is located in one of the substituents R¹. Located by preference in one of the substituents may also mean that this substituent is the anionic group.

Preferred anionic substituents are carboxyl and/or sulpho groups, and sulpho groups are particularly preferred.

The preferred substituents of the substituted alkyl groups are selected from the following substituents -OH, -O (C₁ to C₄ alkyl), -SO₃H, -COOH, phenyl, -NH (C₁ to C₄ alkyl). The alkyl groups having 3 or more carbon atoms are branched or linear. The most preferred alkyl groups are methyl, ethyl, propyl, iso-propyl, butyl, iso-butyl (2-methylpropyl), pentyl, iso-pentyl (3-methylbutyl), hexyl, heptyl, octyl, or nonyl.

The preferred substituents of the substituted C₁ to C₄ alkoxy group are selected from the following substituents -OH, -O (C₁ to C₄ alkyl), -SO₃H, -COOH, -NH (C₁ to C₄ alkyl). The alkoxy groups having 3 or more carbon atoms are branched or linear. The most preferred alkoxy groups are methoxy and ethoxy.

Preferred substituents of the substituted aryl groups are selected from the following substituents -OH, -O (C₁ to C₄ alkyl), -SO₃H, substituted C₁ to C₄ alkyl groups, unsubstituted C₁ to C₄ alkyl groups, substituted C₁ to C₄ alkoxy groups and unsubstituted C₁ to C₄ alkoxy groups, possible substituents of the alkyl and alkoxy groups are as defined before.

In preferred compounds of the general formula (I)
- R⁰: signifies an unsubstituted C₁ to C₂ alkyl group,
- R¹: signifies a substituted C₁ to C₂ alkyl group or an unsubstituted C₁ to C₂ alkyl group, a sulpho group, a C₁ to C₂ alkylene sulpho group, -CO-NH₂, -CO-NH-(C₁ to C₂ alkyl) or CN,
- R²: signifies a substituted C₁ to C₃ alkyl group or an unsubstituted C₁ to C₃ alkyl group, the preferred substituents of the substituted C₁ to C₃ alkyl group are NH-C₁-C₄-alkyl, C₁-C₄-alkylene-COOH and -O-C₁-C₆-alkyl;
- R³: signifies H, a sulpho group, an unsubstituted C₁ to C₂ alkyl group, an unsubstituted C₁ to C₂ alkoxy group,
- R⁴: signifies H, an unsubstituted C₁ to C₂ alkyl group, an unsubstituted C₁ to C₂ alkoxy group,
- R⁶: signifies a substituted C₁ to C₉ alkyl group or an unsubstituted C₁ to C₉ alkyl group, an unsubstituted C₆-C₁₀ aryl group or a C₆-C₁₀ aryl group substituted with 1 to 3 C₁ to C₆ alkyl groups.

In even more preferred compounds of the general formula (I)
- R⁰: signifies a methyl group,
- R¹: signifies -CH₂-SO₃H, -CONH₂ or -CN,
- R²: signifies an ethyl group, -CH₂-CH₂-CH₂-NH-CH₃, -CH₂-CH₂-COOH, or -CH₂-CH₂-CH₂-O-CH₂-CH₂-CH₂-CH₃;
- R³: signifies H, methyl, methoxy or a sulpho group;
- R⁴: signifies H, methyl or a methoxy group;
- R⁶: signifies an unsubstituted C₁ to C₉ alkyl group, a C₁ to C₉ alkyl group substituted with phenyl or with (C₁-C₄-alkyl)₁₋₃ phenyl, an unsubstituted phenyl group, or a phenyl group substituted with 1 to 3 C₁ to C₄ alkyl groups.

In the most preferred compounds of the general formula (I)
- R⁰: signifies a methyl group,
- R¹: signifies a -CH₂-SO₃H group,
- R²: signifies an ethyl group,
- R³: signifies H, methyl, methoxy,
- R⁴: signifies H,
- R⁶: signifies an unsubstituted C₄-C₉ alkyl group, a C₁-C₄ alkyl group substituted with a phenyl group, e.g. benzyl, a C₁ to C₄ alkyl group substituted with C₁-C₄-alkylphenyl, an unsubstituted phenyl group, or a phenyl group substituted with a C₁-C₄ alkyl group.

The present invention further provides a process for the preparation of compounds of formula (I) comprising reacting the tris-diazonium salt of a triamine of formula (II), 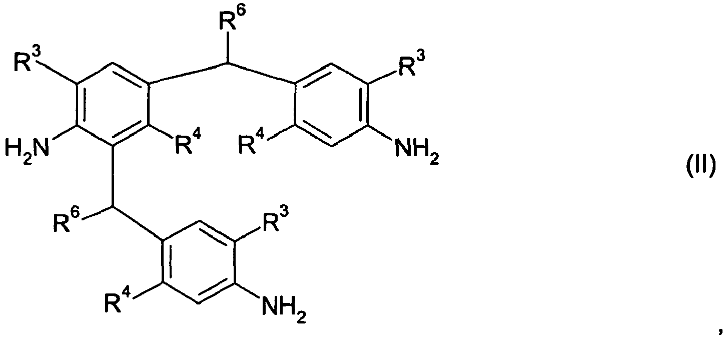 with three equivalents of a compound of formula (III) 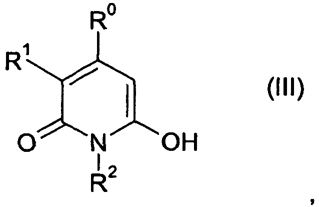 in which R⁰, R¹, R², R³, R⁴ and R⁶ are as above defined.

Diazotisation and coupling may be effected in accordance with conventional methods. The coupling reaction advantageously is carried out in an aqueous reaction medium in a temperature range of from about 0 to 60 °C, preferably from 0 to 40 °C, more preferred from 0 to 10 °C, even more preferred from 0 to 5 °C, and in a pH range of from 2 to 9, preferably from pH 3 to 6. All temperatures are given in degrees Celsius.

The reaction mixtures comprising compounds of formula (I) thus obtained may be converted into stable liquid formulations with improved long term stability by desalting, e.g. by ultra filtration.

The starting compounds, i.e. the amines of formula (II) and the pyridones of formula (III), are either known or may be prepared in accordance with known methods from available starting materials.

Amines according to the formula (II) may be prepared according the methods disclosed in DE-4014847, thus starting from two equivalents of an aldehyde of the formula 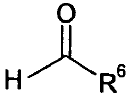 by reacting at elevated temperature and elevated pressure under acidic condition with three equivalents of an aromatic amine of the formula 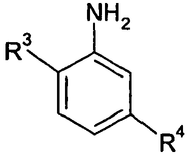 forming the triamine of the formula (II)

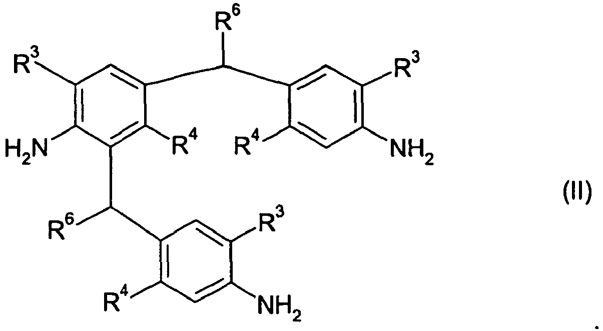

Advantageously, the reaction mixture of said aldehyde and said aromatic amine is heated in a closed autoclave at 120 to 250 °C, preferably 140 to 200 °C, more preferably 140 to 150 °C, the reaction mixture is kept at this temperature for 3 to 8 hours, preferably for 4 to 5 hours. The elevated temperature leads in this closed autoclave to the elevated pressure. Alternatively the synthesis may be performed in the melt of the amino compound-hydrochloride adding the aldehyde at a temperature of from 200 to 250 °C and the pressure is atmospheric pressure.

The dyes of the formula (I) can be isolated from the reaction medium by conventional processes, for example by salting out with an alkali metal salt, filtering and drying, if appropriate under reduced pressure and at elevated temperature.

Depending on the reaction and/or isolation conditions, the dyes of the formula (I) can be obtained as free acid, as salt or as mixed salt which contains for example one or more cations selected from alkali metal ions, for example the sodium ion, or an ammonium ion or alkylammonium cation, for example mono-, di- or trimethyl- or -ethylammonium cations. The dye can be converted by conventional techniques from the free acid into a salt or into a mixed salt or vice versa or from one salt form into another. If desired, the dyes can be further purified by diafiltration, in which case unwanted salts and synthesis by-products are separated from the crude anionic dye.

The removal of unwanted salts and synthesis by-products and partial removal of water from the crude dye solution is advantageously carried out by means of a semipermeable membrane by applying a pressure whereby the dye is obtained without the unwanted salts and synthesis by-products as a solution and if necessary as a solid body in a conventional manner.

The dyes of the formula (I) and their salts are particularly suitable for dyeing or printing fibrous material containing or consisting of natural or synthetic polyamides in yellow to greenish yellow shades. The dyes of the formula (I) and their salts are also suitable for producing inkjet printing inks and for using these inkjet printing inks to print fibrous material which contains or consists of natural or synthetic polyamides or cellulose (paper for example).

The invention accordingly provides for the use of the dyes of the formula (I), their salts and mixtures of the dyes of formula (I) for dyeing and/or printing fibrous materials containing or consisting of natural or synthetic polyamides. A further aspect is the production of Inkjet printing inks and their use for printing fibrous materials containing or consisting of natural or synthetic polyamides.

Dyeing can be carried out according to known processes. Preference is given to dyeing in the exhaust process at a temperature of about 30 to 140 °C, more preferably 80 to 120 °C and most preferably 80 to 100 °C, and at a liquor ratio in the range from about 3:1 to 40:1.

The substrate to be dyed can be present in the form of yarn, woven fabric, loop-formingly knitted fabric or carpet for example. Fully fashioned dyeings are even permanently possible on delicate substrates, examples being lambswool, cashmere, alpaca and mohair. The dyes of the invention are particularly useful for dyeing finedenier fibres (microfibres).

The dyes according to the present invention and their salts are highly compatible with known acid dyes. Accordingly, the dyes of the formula (I), their salts or mixtures thereof can be used alone in a dyeing or printing process or else as a component in a combination shade dyeing or printing composition together with other acid dyes of the same class, i.e. with acid dyes possessing comparable dyeing properties, such as for example fastness properties and exhaustion rates from the dyebath onto the substrate. The dyes of the present invention can be used in particular together with other dyes having suitable chromophores. The ratio in which the dyes are present in a combination shade dyeing or printing composition is dictated by the hue to be obtained.

The novel dyes of the formula (I), as stated above, are very useful for dyeing natural and synthetic polyamides, i.e. wool, silk and all nylon types, on each of which dyeings having a high fastness level, especially good light fastness and good wet fastnesses (washing, alkaline perspiration) are obtained. The dyes of the formula (I) and their salts have a high rate of exhaustion. The ability of the dyes of the formula (I) and their salts to build up is likewise very good. On-tone dyeings on the identified substrates are of outstanding quality. All dyeings moreover have a constant hue under artificial light. Furthermore, the fastness to decating and boiling is good.

One decisive advantage of the novel dyes is that they are metal free and provide very level dyeings.

The invention's dyes of the formula (I) can also be used as yellow components in trichromatic dyeing or printing. Trichromatic dyeing or printing can utilize all customary and known dyeing and printing processes, such as for example the continuous process, exhaustion process, foam dyeing process and Ink-Jet process.

The composition of the individual dye components in a trichromatic dye mixture depends on the desired hue. A brown hue, for example, preferably utilizes 20 to 40 % by weight of the invention's yellow component, 40 to 60 % by weight of an orange or red component and 10 to 20 % by weight of a blue component.

The yellow component, as described above, can consist of a single component or of a mixture of different yellow individual components conforming to the formula (I). Preference is given to double and triple combinations.

Particularly preferred red and/or blue components are described in WO-2002/46318 or WO-99/51681 respectively.

In the following examples all parts and all percentages are by weight, and the temperatures given are in degrees Celsius, unless indicated to the contrary.

### Example 1: (method A)

127,2 g benzaldehyde (1,2 mol), 221,4 g o-anisidine (1,8 mol), 345 g aqueous hydrochloric acid (30 %) and 400 ml water were heated in an autoclave at 140 °C for 6 hours.

The reaction mixture was poured on 1 kg ice and 400 g sodium hydroxide solution in water (30 %).The organic layer was separated and residual o-anisidine separated with toluene. The residue was re-crystallized from toluene and the press cake washed with cold ethanol.

A compound of the formula (1) was obtained:

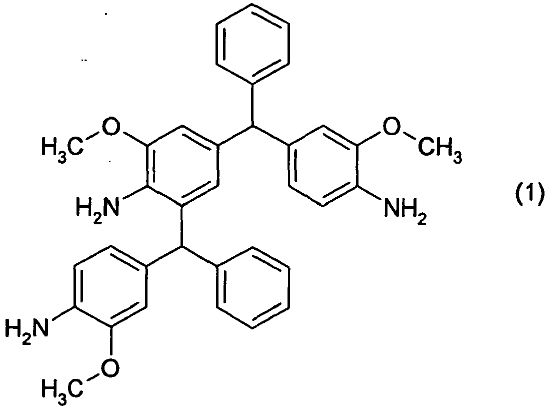

### Example 2: (method B)

233.1 g (1,8 mol) of aniline hydrochloride were melted in a 1-I reaction vessel under nitrogen at 220 °C and 120 g (1,2 mol) of 2-ethylbutyraldehyde was slowly added thereto while stirring over a period of 4 hour.

The temperature of the melt fell from initially about 200 to 185 °C because of the reflux. The temperature was kept for one hour at 185 °C and the hot melt was poured on a mixture of 1,6 kg ice and 1,05 kg of sodium hydroxide solution (30 %).

The organic layer was separated and washed free from salt with demineralised water.

The residue was re-crystallized from toluene and the press cake was washed with cold ethanol.

A compound of the formula (2) was obtained:

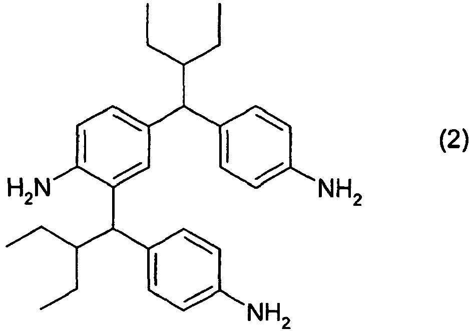

**Table 1: Synthesis of the amines starting with aldehydes according to method A in solution or according to method B as a melt**

| | | |
|---|---|---|
| 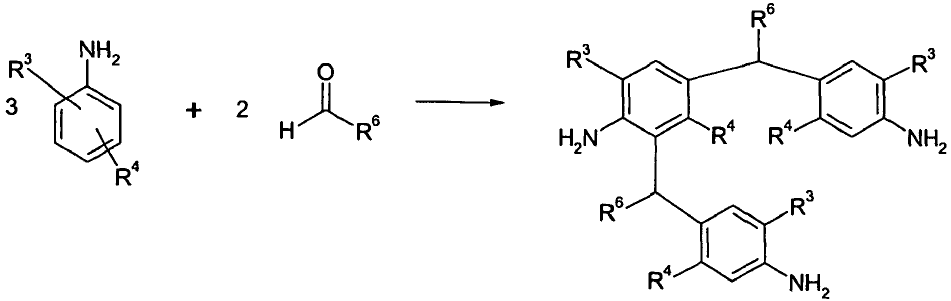 | | |

| Nr. | 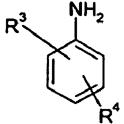 | R⁶ |
|---|---|---|
| 3 | 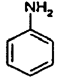 | CH₂CH₂CH₂CH₃ |
| 4 | 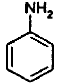 | CH₂CH(CH₃)₂ |
| 5 | 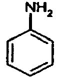 | CH(CH₃)CH₂CH₃ |
| 6 | 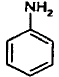 | CH(CH₃)CH₂CH₂CH₃ |
| 7 | 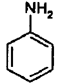 | (CH₂)₅CH₃ |
| 8 | 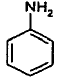 | (CH₂)₄CH₃ |
| 9 | 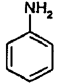 | CH(CH₂CH₃)(CH₂)₃CH₃ |
| 10 | 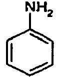 | (CH₂)₆CH₃ |
| 11 | 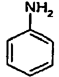 | (CH₂)₇CH₃ |
| 12 | 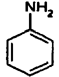 | (CH₂)₈CH₃ |
| 13 | 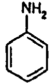 | CH₂-Ph |
| 14 | 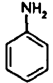 | Ph |
| 15 | 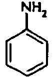 | 4- Ph-CH₃ |
| 16 | 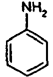 | 4- Ph-CH(CH₃)₂ |
| 17 | 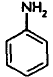 | 4- Ph-t-Bu |
| 18 | 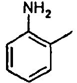 | CH₂CH(CH₃)₂ |
| 19 | 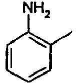 | CH(CH₂CH₃)₂ |
| 20 | 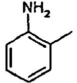 | Phenyl |
| 21 | 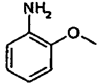 | CH(CH₂CH₃)₂ |
| 22 | 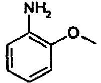 | CH(CH₂CH₃)(CH₂)₃CH₃ |

### Example 23:

44.4 parts (0.1 mol) of the amine (2) of Example 2 were tris-diazotised with 20.7 parts (0.3 mol) of sodium nitrite at 0 to 5 °C in 200 parts of water and 90 parts of aqueous hydrochloric acid (30 %).

74.1 parts (0.3 mol) of a compound of the formula 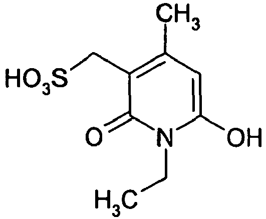 dissolved in 350 parts of water were added over 30 minutes to the ice cold tris-diazotised solution. By the addition of 30 % aqueous NaOH solution the pH was brought to 3 to 4.5 yielding a dyestuff of formula (5) and the dyestuff was in solution. lambda max = 448 nm.

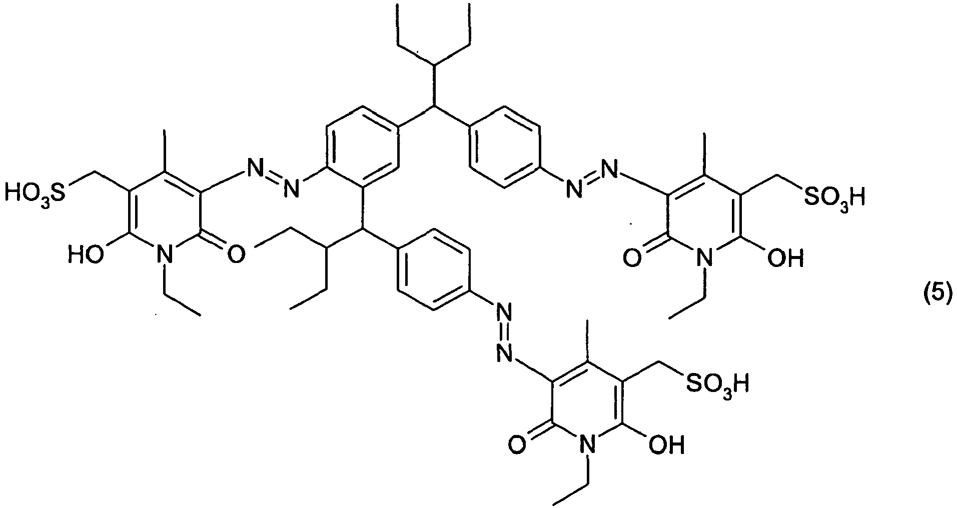

The dyestuff can be isolated by concentration under vacuum or by precipitation in acetone/ethanol.

The reaction mixture can be used directly for dyeing without isolation of the product. The dyestuff of formula (5) has surprisingly very high solubility in water and gives yellow dyeings with very good fastness properties.

### Example 24:

54.6 parts (0.1 mol) of the amine (1) of Example 1 were diazotised with 20.7 parts (0.3 mol) of sodium nitrite at 0 to 5 °C in 200 parts of water and 90 parts of aqueous hydrochloric acid (30 %).

74.1 parts (0.3 mol) of a compound of the formula 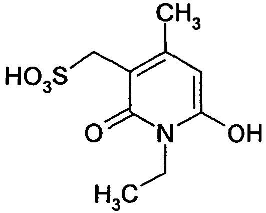 dissolved in 350 parts of water were added over 30 minutes to the ice cold tris-diazotised solution. By the addition of 30 % aqueous NaOH solution the pH was brought to 3 to 4.5 yielding a dyestuff of formula (6) and the dyestuff was in solution. lambda max = 479 nm.

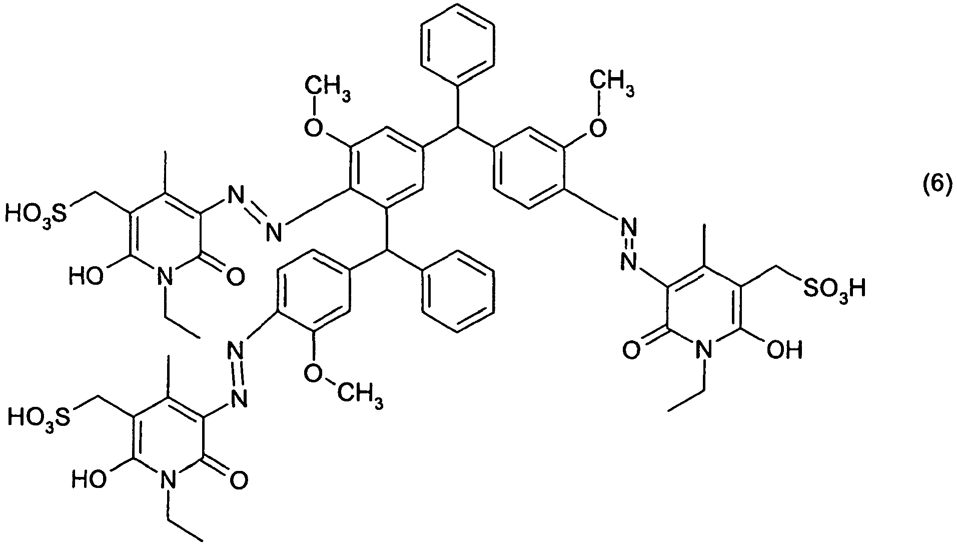

The dyestuff can be isolated by concentration under vacuum or by precipitation in acetone/ethanol.

The reaction mixture can be used directly for dyeing without isolation of the product. The dyestuff of formula (6) has very high solubility in water and gives yellow dyeings with surprisingly very good fastness properties.

The following compounds shown in Table 2 were synthesized according to Example 23 or 24 using the amine 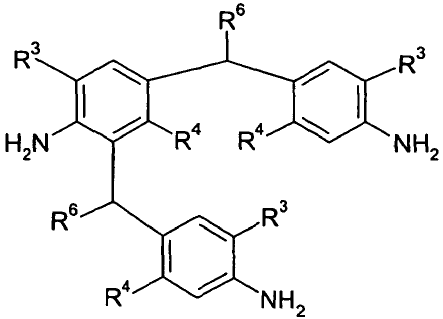 as diazo component and reacted with the coupling component 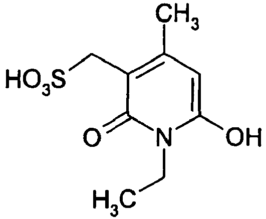 wherein a compound of the following formula was obtained:

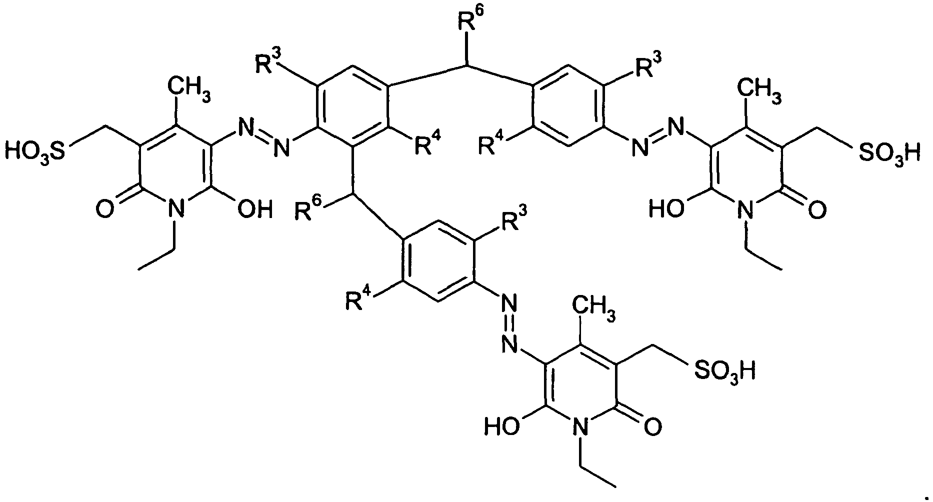

**Table 2: synthesis of the dyestuffs with the amines from Table 1 λ max (lambda max) is indicated in nm (nanometers; measured in 1 % acetic acid solution in water).**

| Dye-stuff-no. | Triamine | R⁶ of Ex. No.. | λ max |
|---|---|---|---|
| 25 | 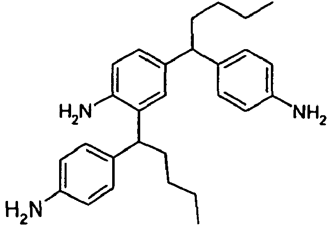 | 3 | 430 |
| 26 | 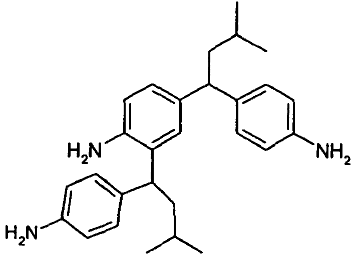 | 4 | 435 |
| 27 | 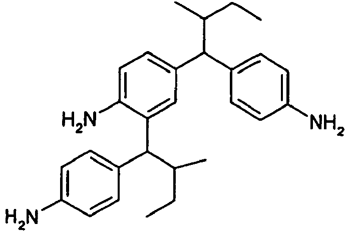 | 5 | 439 |
| 28 | 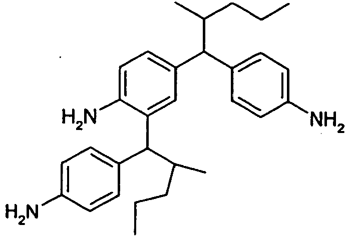 | 6 | 438 |
| 29 | 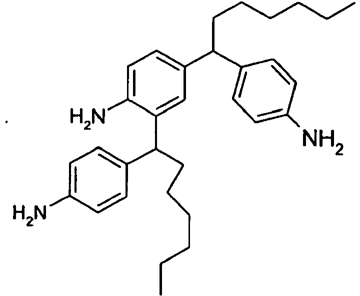 | 7 | 437 |
| 30 | 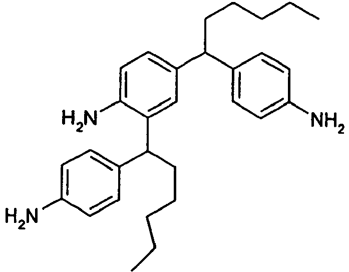 | 8 | 436 |
| 31 | 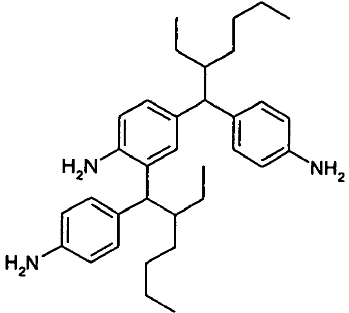 | 9 | 439 |
| 32 | 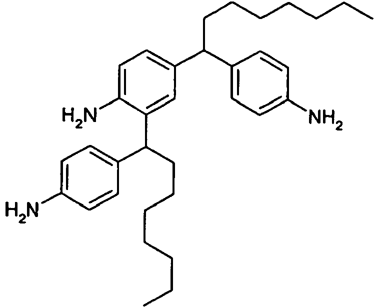 | 10 | 434 |
| 33 | 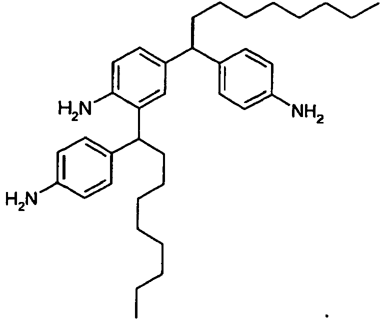 | 11 | 438 |
| 34 | 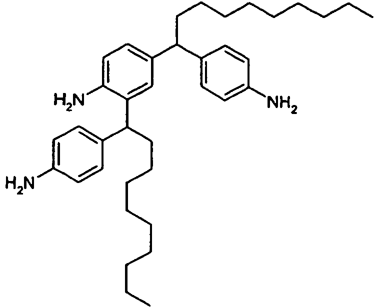 | 12 | 440 |
| 35 | 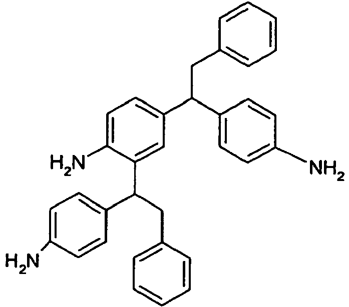 | 13 | 434 |
| 36 | 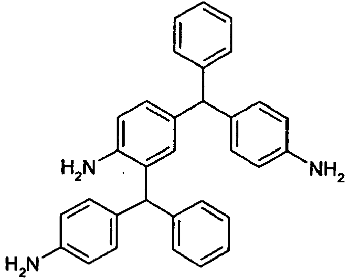 | 14 | 436 |
| 37 | 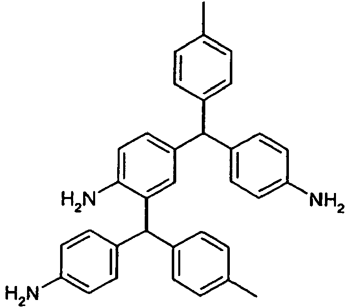 | 15 | 434 |
| 38 | 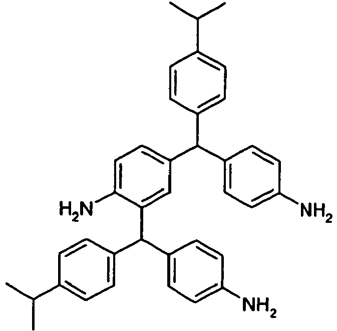 | 16 | 439 |
| 39 | 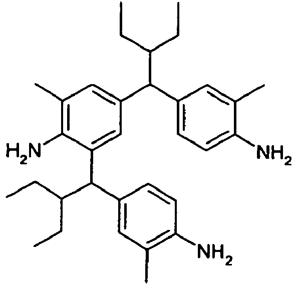 | 19 | 441 |
| 40 | 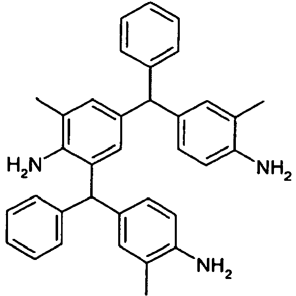 | 20 | 448 |
| 41 | 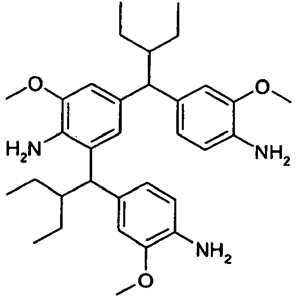 | 21 | 471 |
| 42 | 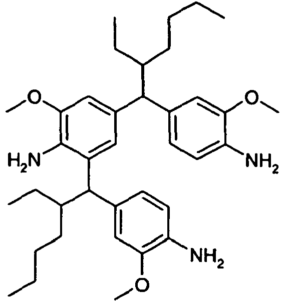 | 22 | 466 |

### Use Example A

A dyebath at 40 °C, consisting of 2000 parts of water, 1 part of a weakly cation-active levelling agent which is based on an ethoxylated aminopropyl fatty acid amide and which has affinity for dye, 0.25 part of the dye of Example 23 and adjusted to pH 5 with 1 to 2 parts of 40 % acetic acid is entered with 100 parts of nylon-6 fabric. After 10 minutes at 40 °C, the dyebath is heated to 98 °C at a rate of 1 °C per minute and then left at the boil for 45 to 60 minutes. Thereafter it is cooled down to 70 °C over 15 minutes. The dyeing is removed from the bath, rinsed with hot and then with cold water and dried. The result obtained is a yellow polyamide dyeing possessing good light and wet fastnesses.

### Use Example B

A dyebath at 40 °C, consisting of 2000 parts of water, 1 part of a weakly cation-active levelling agent which is based on an ethoxylated aminopropyl fatty acid amide and which has affinity for dye, 0.3 part of the dye of Example 23 and adjusted to pH 5.5 with 1 to 2 parts of 40 % acetic acid is entered with 100 parts of nylon-6,6 fabric. After 10 minutes at 40 °C, the dyebath is heated to 120 °C at a rate of 1.5 °C per minute and then left at this temperature for 15 to 25 minutes. Thereafter it is cooled down to 70 °C over 25 minutes. The dyeing is removed from the dyebath, rinsed with hot and then with cold water and dried. The result obtained is a yellow polyamide dyeing with good levelness and having good light and wet fastnesses.

### Use Example C

A dyebath at 40°C, consisting of 4000 parts of water, 1 part of a weakly amphoteric levelling agent which is based on a sulphated, ethoxylated fatty acid amide and which has affinity for dye, 0.4 part of the dye of Example 23 and adjusted to pH 5 with 1 to 2 parts of 40 % acetic acid is entered with 100 parts of wool fabric. After 10 minutes at 40 °C, the dyebath is heated to boiling at a rate of 1 °C per minute and then left at the boil for 40 to 60 minutes. Thereafter it is cooled down to 70 °C over 20 minutes. The dyeing is removed from the bath, rinsed with hot and then with cold water and dried. The result obtained is a yellow wool dyeing possessing good light and wet fastnesses.

### Use Example D

100 parts of a woven nylon-6 material are padded with a 50°C liquor consisting of

| | |
|---|---|
| 40 | parts of the dye of Example 23, |
| 100 | parts of urea, |
| 20 | parts of a nonionic solubilizer based on butyldiglycol, |
| 15 to 20 | parts of acetic acid (to adjust the pH to 4), |
| 10 | parts of a weakly cation-active levelling agent which is based on an ethoxylated aminopropyl fatty acid amide and has affinity for dye, |
| and | |
| 810 to 815 | parts of water (to make up to 1000 parts of padding liquor). |

The material thus impregnated is rolled up and left to dwell in a steaming chamber under saturated steam conditions at 85 to 98 °C for 3 to 6 hours for fixation. The dyeing is then rinsed with hot and cold water and dried. The result obtained is a yellow nylon dyeing having good levelness in the piece and good light and wet fastnesses.

### Use Example E

A textile cut pile sheet material composed of nylon-6 and having a synthetic base fabric is padded with a liquor containing per 1000 parts

| | |
|---|---|
| 1 | part of dye of Example 23 |
| 4 | parts of a commercially available thickener based on carob flour ether |
| 2 | parts of a nonionic ethylene oxide adduct of a higher alkylphenol |
| 1 | part of 60 % acetic acid. |

This is followed by printing with a paste which per 1000 parts contains the following components:

| | |
|---|---|
| 20 | parts of commercially available alkoxylated fatty alkylamine |
| 20 | parts of a commercially available thickener based on carob flour ether. |

The print is fixed for 6 minutes in saturated steam at 100 °C, rinsed and dried. The result obtained is a level-coloured cover material having a yellow and white pattern.

Use Examples A to E are carried out with dyes 24 to 42 with similar results.

### Use Example F

3 parts of the dye of Example 23 are dissolved in 82 parts of demineralized water and 15 parts of diethylene glycol at 60 °C. Cooling down to room temperature gives an orange printing ink which is very highly suitable for ink jet printing on paper or polyamide and wool textiles.

Use Example F is carried out with dyes 24 to 42 with similar results.

### Use Example G

A dyebath consisting of 1000 parts of water, 80 parts of calcined Glauber salt, 1 part of sodium nitrobenzene-3-sulphonate and 1 part of dye from Example 23 is heated to 80 °C in the course of 10 minutes. Then, 100 parts of mercerized cotton are added. This is followed by dyeing at 80 °C for 5 minutes and then heating to 95 °C in the course of 15 minutes. After 10 minutes at 95 °C, 3 parts of sodium carbonate are added, followed by a further 7 parts of sodium carbonate after 20 minutes and another 10 parts of sodium carbonate after 30 minutes at 95 °C. Dyeing is subsequently continued at 95 °C for 60 minutes. The dyed material is then removed from the dyebath and rinsed in running demineralized water for 3 minutes. This is followed by two washes for 10 minutes in 5000 parts of boiling demineralized water at a time and subsequent rinsing in running demineralized water at 60 °C for 3 minutes and with cold tap water for one minute. Drying leaves a brilliant yellow cotton dyeing having good fastnesses.

### Use Example H

0.2 part of the dye of Example 23 is dissolved in 100 parts of hot water and the solution is cooled down to room temperature. This solution is added to 100 parts of chemically bleached sulphite pulp beaten in 2000 parts of water in a Hollander. After 15 minutes of commixing the stuff is sized with resin size and aluminium sulphate in a conventional manner. Paper produced from this stuff has a yellow shade with good wet fastnesses.

Use Examples G and H are carried out with dyes 24 to 42 with similar results.

## Claims

1. A compound of formula (I) 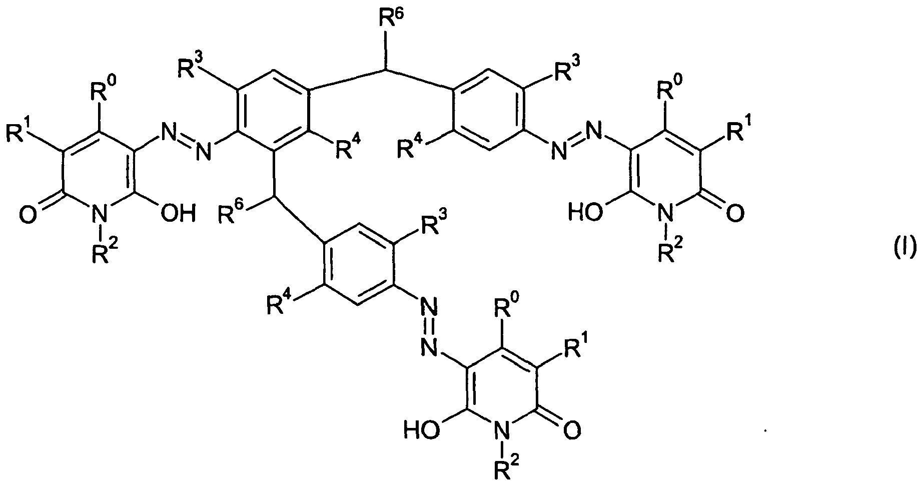 wherein
R⁰ signifies a substituted C₁ to C₄ alkyl group or an unsubstituted C₁ to C₄ alkyl group,
R¹ signifies H, a substituted C₁ to C₄ alkyl group or an unsubstituted C₁ to C₄ alkyl group, a sulpho group, a C₁ to C₄ alkylene-sulpho group, -CO-NH₂, -CO-NH-(C₁ to C₄ alkyl) or CN,
R² signifies H, a substituted C₁ to C₄ alkyl group or an unsubstituted C₁ to C₄ alkyl group,
R³ signifies H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group,
R⁴ signifies H, a substituted C₁ to C₄ alkyl group or an unsubstituted C₁ to C₄ alkyl group, a substituted C₁ to C₄ alkoxy group or an unsubstituted C₁ to C₄ alkoxy group,
R⁶ signifies a substituted C₁ to C₉ alkyl group or an unsubstituted C₁ to C₉ alkyl group, an unsubstituted aryl group or a substituted aryl group,
wherein the compound of formula (I) bears at least one anionic substituent.

2. The compound as claimed in claim 1, bearing 1 or 2 or 3 anionic substituents.

3. The compound as claimed in claim 1 or 2, wherein the at least one anionic substituent is a sulpho group.

4. The compound as claimed in at least one of claims 1 to 3, wherein
R⁰ signifies an unsubstituted C₁ to C₂ alkyl group,
R¹ signifies a substituted C₁ to C₂ alkyl group or an unsubstituted C₁ to C₂ alkyl group, a sulpho group, a C₁ to C₂ alkylene sulpho group, -CO-NH₂, -CO-NH-(C₁ to C₂ alkyl) or CN,
R² signifies a substituted C₁ to C₃ alkyl group or an unsubstituted C₁ to C₃ alkyl group;
R³ signifies H, a sulpho group, an unsubstituted C₁ to C₂ alkyl group, an unsubstituted C₁ to C₂ alkoxy group,
R⁴ signifies H, an unsubstituted C₁ to C₂ alkyl group, an unsubstituted C₁ to C₂ alkoxy group,
R⁶ signifies a substituted C₁ to C₉ alkyl group or an unsubstituted C₁ to C₉ alkyl group, an unsubstituted C₆-C₁₀ aryl group or a C₆-C₁₀ aryl group substituted with 1 to 3 C₁ to C₆ alkyl groups.

5. The compound as claimed in at least one of claims 1 to 4, wherein
R⁰ signifies a methyl group,
R¹ signifies -CH₂-SO₃H, -CONH₂ or -CN,
R² signifies an ethyl group, -CH₂-CH₂-CH₂-NH-CH₃, -CH₂-CH₂-COOH, or -CH₂-CH₂-CH₂-O-CH₂-CH₂-CH₂-CH₃,
R³ signifies H, methyl, methoxy or a sulpho group,
R⁴ signifies H, methyl or a methoxy group,
R⁶ signifies an unsubstituted C₁ to C₉ alkyl group, a C₁ to C₉ alkyl group substituted with phenyl or with (C₁-C₄-alkyl)₁₋₃ phenyl, an unsubstituted phenyl group, or a phenyl group substituted with 1 to 3 C₁ to C₄ alkyl groups.

6. The compound as claimed in at least one of claims 1 to 5, wherein
R⁰ signifies a methyl group,
R¹ signifies a -CH₂-SO₃H group,
R² signifies an ethyl group,
R³ signifies H, methyl, methoxy,
R⁴ signifies H,
R⁶ signifies an unsubstituted C₄-C₉ alkyl group, a C₁-C₄ alkyl group substituted with a phenyl group, a C₁ to C₄ alkyl group substituted with C₁-C₄-alkylphenyl, an unsubstituted phenyl group, or a phenyl group substituted with a C₁-C₄ alkyl group.

7. A process for the preparation of compounds of formula (I) as claimed in any of the claims 1 to 6, comprising reacting the tris-diazonium salt of a triamine of formula (II), 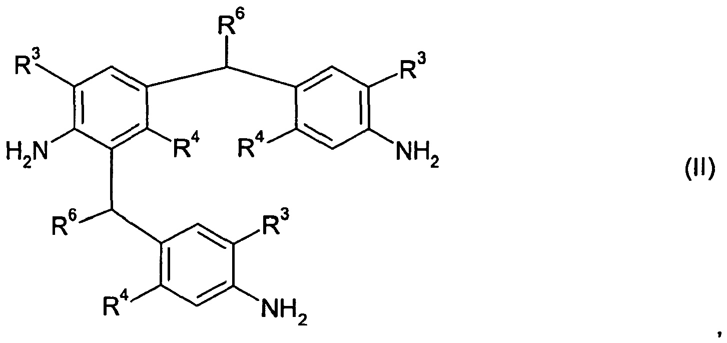 with three equivalents of a compound of formula (III) 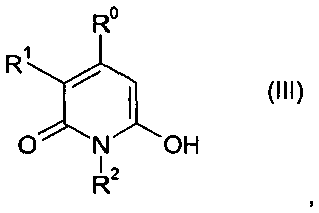 in which R⁰, R¹, R², R³, R⁴ and R⁶ are as defined in any of claims 1 to 6.

8. Use of a compound as claimed in any of claims 1 to 6 for dyeing or printing fibrous material containing or consisting of natural or synthetic polyamides.

9. The use as claimed in claim 8, wherein the polyamides are wool, silk, or nylon.

10. The use as claimed in claim 8 or 9 as yellow component in a trichromatic dyeing or printing process.

## Patentansprüche

1. Verbindung der Formel (I) 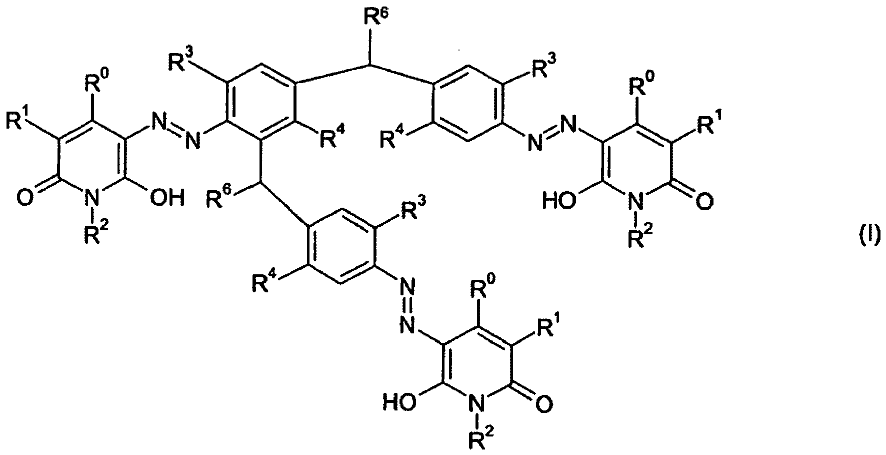 wobei
R⁰ bedeutet eine substituierte C₁- bis C₄-Alkylgruppe oder eine unsubstituierte C₁- bis C₄-Alkylgruppe,
R¹ bedeutet H, eine substituierte C₁- bis C₄-Alkylgruppe oder eine unsubstituierte C₁- bis C₄-Alkylgruppe, eine Sulfogruppe, eine C₁- bis C₄-Alkylen-Sulfogruppe, -CO-NH₂, -CO-NH-(C₁- bis C₄-Alkyl) oder CN,
R² bedeutet H, eine substituierte C₁- bis C₄-Alkylgruppe oder eine unsubstituierte C₁- bis C₄-Alkylgruppe,
R³ bedeutet H, eine Sulfogruppe, eine substituierte C₁- bis C₄-Alkylgruppe oder eine unsubstituierte C₁- bis C₄-Alkylgruppe, eine substituierte C₁-bis C₄-Alkoxygruppe oder eine unsubstituierte C₁- bis C₄-Alkoxygruppe,
R⁴ bedeutet H, eine substituierte C₁- bis C₄-Alkylgruppe oder eine unsubstituierte C₁- bis C₄-Alkylgruppe, eine substitutierte C₁- bis C₄-Alkoxygruppe oder eine unsubstituierte C₁- bis C₄-Alkoxygruppe,
R⁶ bedeutet eine substitutierte C₁- bis C₉-Alkylgruppe oder eine unsubstitutierte C₁- bis C₉-Alkylgruppe, eine unsubstituierte Arylgruppe oder eine substitutierte Arylgruppe,
wobei die Verbindung der Formel (I) mindestens einen anionischen Substituenten enthält.

2. Verbindung nach Anspruch 1, enthaltend 1 oder 2 oder 3 anionische Substituenten.

3. Verbindung nach Anspruch 1 oder 2, wobei der mindestens eine anionische Substituent eine Sulfogruppe ist.

4. Verbindung nach einem der Ansprüche 1 bis 3, wobei
R⁰ bedeutet eine unsubstituierte C₁- bis C₂-Alkylgruppe,
R¹ bedeutet eine substituierte C₁- bis C₂-Alkylgruppe oder eine unsubstituierte C₁- bis C₂-Alkylgruppe, eine Sulfogruppe, eine C₁- bis C₂-Alkylen-Sulfogruppe, -CO-NH₂, -CO-NH-(C₁- bis C₂-Alkyl) oder CN,
R² bedeutet eine substituierte C₁- bis C₃-Alkylgruppe oder eine unsubstituierte C₁- bis C₃-Alkylgruppe,
R³ bedeutet H, eine Sulfogruppe, eine unsubstitutierte C₁- bis C₂-Alkylgruppe, eine unsubstituierte C₁- bis C₂-Alkoxygruppe,
R⁴ bedeutet H, eine unsubstitutierte C₁- bis C₂-Alkylgruppe, eine unsubstituierte C₁- bis C₂-Alkoxygruppe,
R⁶ bedeutet eine substituierte C₁- bis C₉-Alkylgruppe oder eine unsubstitutierte C₁- bis C₉-Alkylgruppe, eine unsubstituierte C₆- bis C₁₀-Arylgruppe oder eine C₆- bis C₁₀-Arylgruppe substituiert mit 1 bis 3 C₁-bis C₆-Alkylgruppen.

5. Verbindung nach einem der Ansprüche 1 bis 4, wobei
R⁰ bedeutet eine Methylgruppe,
R¹ bedeutet -CH₂-SO₃H, -CONH₂ oder -CN,
R² bedeutet eine Ethylgruppe, -CH₂-CH₂-CH₂-NH-CH₃, -CH₂-CH₂-COOH, oder -CH₂-CH₂-CH₂-O-CH₂-CH₂-CH₂-CH₃,
R³ bedeutet H, Methyl, Methoxy oder eine Sulfogruppe,
R⁴ bedeutet H, Methyl oder eine Methoxygruppe,
R⁶ bedeutet eine unsubstitutierte C₁- bis C₉-Alkylgruppe, eine C₁- bis C₉-Alkylgruppe substitutiert mit Phenyl oder mit (C₁- bis C₄-Alkyl)₁₋₃-Phenyl, eine unsubstituierte Phenylgruppe oder eine Phenylgruppe substituiert mit 1 bis 3 C₁- bis C₄-Alkylgruppen.

6. Verbindung nach einem der Ansprüche 1 bis 5, wobei
R⁰ bedeutet eine Methylgruppe,
R¹ bedeutet eine -CH₂-SO₃H-Gruppe,
R² bedeutet eine Ethylgruppe,
R³ bedeutet H, Methyl, Methoxy,
R⁴ bedeutet H,
R⁶ bedeutet eine unsubstituierte C₄- bis C₉-Alkylgruppe, eine C₁- bis C₄-Alkylgruppe substituiert mit einer Phenylgruppe, eine C₁- bis C₄-Alkylgruppe substituiert mit C₁- bis C₄-Alkylphenyl, eine unsubstituierte Phenylgruppe, oder eine Phenylgruppe substituiert mit einer C₁- bis C₄-Alkylgruppe.

7. Verfahren zur Herstellung von Verbindungen der Formel (I) nach einem der Ansprüche 1 bis 6, aufweisend Reagieren des Tris-Diazoniumsalzes eines Triamins der Formel (II), 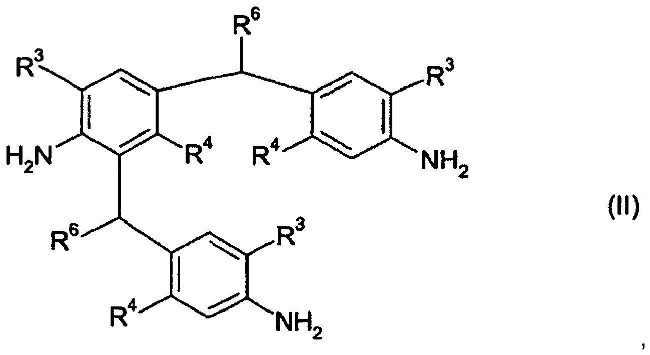 mit drei Äquivalenten einer Verbindung der Formel (III), 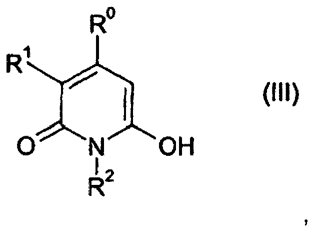 in welchen R⁰, R¹, R², R³, R⁴ und R⁶ gemäß einem der Ansprüche 1 bis 6 definiert sind.

8. Verwendung einer Verbindung nach einem der Ansprüche 1 bis 6 zum Färben oder Drucken von Fasermaterial enthaltend oder bestehend aus natürlichen oder synthetischen Polyamiden.

9. Verwendung nach Anspruch 8, wobei die Polyamide Wolle, Seide oder Nylon sind.

10. Verwendung nach Anspruch 8 oder 9 als gelbe Komponente in einem trichromatischen Färbe- oder Druckverfahren.

## Revendications

1. Composé de formule (I) 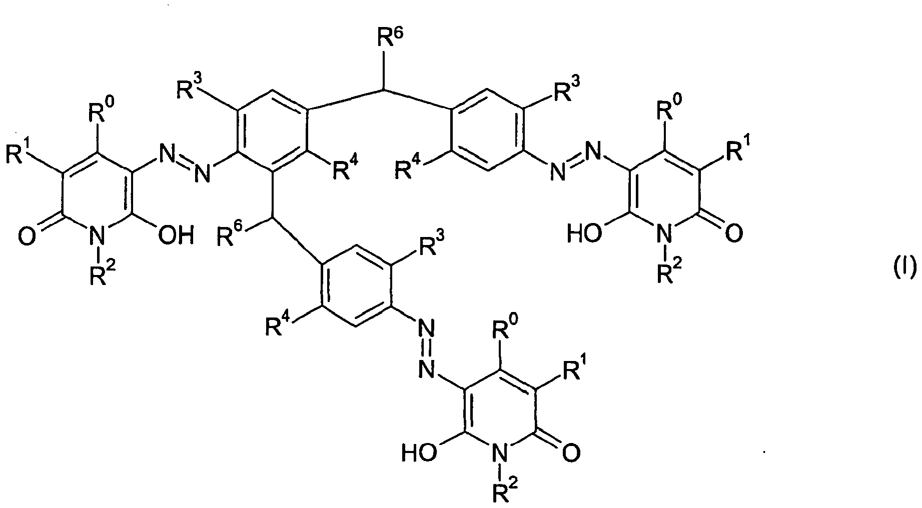 dans laquelle
R⁰ désigne un groupe alkyle substitué en C₁ à C₄ ou un groupe alkyle non substitué en C₁ à C₄,
R¹ désigne un atome d'H, un groupe alkyle substitué en C₁ à C₄ ou un groupe alkyle non substitué en C₁ à C₄, un groupe sulfo, un groupe alkylène-sulfo en C₁ à C₄, -CO-NH₂, -CO-NH-(alkyle en C₁ à C₄) ou CN,
R² désigne un atome d'H, un groupe alkyle substitué en C₁ à C₄ ou un groupe alkyle non substitué en C₁ à C₄,
R³ désigne un atome d'H, un groupe sulfo, un groupe alkyle substitué en C₁ à C₄ ou un groupe alkyle non substitué en C₁ à C₄, un groupe alcoxy substitué en C₁ à C₄ ou un groupe alcoxy non substitué en C₁ à C₄,
R⁴ désigne un atome d'H, un groupe alkyle substitué en C₁ à C₄ ou un groupe alkyle non substitué en C₁ à C₄, un groupe alcoxy substitué en C₁ à C₄ ou un groupe alcoxy non substitué en C₁ à C₄,
R⁶ désigne un groupe alkyle substitué en C₁ à C₉ ou un groupe alkyle non substitué en C₁ à C₉, un groupe aryle non substitué ou un groupe aryle substitué, dans lequel le composé de formule (I) porte au moins un substituant anionique.

2. Composé selon la revendication 1, portant 1 ou 2 ou 3 substituants anioniques.

3. Composé selon la revendication 1 ou 2, dans lequel l'au moins un substituant anionique est un groupe sulfo.

4. Composé tel que revendiqué dans au moins l'une des revendications 1 à 3, dans lequel
R⁰ désigne un groupe alkyle non substitué en C₁ à C₂,
R¹ désigne un groupe alkyle substitué en C₁ à C₂ ou un groupe alkyle non substitué en C₁ à C₂, un groupe sulfo, un groupe alkylène-sulfo en C₁ à C₂, -CO-NH₂, -CO-NH-(alkyle en C₁ à C₂) ou CN,
R² désigne un groupe alkyle substitué en C₁ à C₃ ou un groupe alkyle non substitué en C₁ à C₃ ;
R³ désigne un atome d'H, un groupe sulfo, un groupe alkyle non substitué en C₁ à C₂, un groupe alcoxy non substitué en C₁ à C₂,
R⁴ désigne un atome d'H, un groupe alkyle non substitué en C₁ à C₂, un groupe alcoxy non substitué en C₁ à C₂,
R⁶ désigne un groupe alkyle substitué en C₁ à C₉ ou un groupe alkyle non substitué en C₁ à C₉, un groupe aryle non substitué en C₆ à C₁₀ ou un groupe aryle en C₆ à C₁₀ substitué par 1 à 3 groupes alkyles en C₁ à C₆.

5. Composé tel que revendiqué dans au moins l'une des revendications 1 à 4, dans lequel
R⁰ désigne un groupe méthyle,
R¹ désigne -CH₂-SO₃H, -CONH₂ ou -CN,
R² désigne un groupe éthyle, -CH₂-CH₂-CH₂-NH-CH₃, -CH₂-CH₂-COOH ou -CH₂-CH₂-CH₂-O-CH₂-CH₂-CH₂-CH₃,
R³ désigne un atome d'H, ou un groupe méthyle, méthoxy ou sulfo,
R⁴ désigne un atome d'H, ou un groupe méthyle ou méthoxy,
R⁶ désigne un groupe alkyle non substitué en C₁ à C₉, un groupe alkyle en C₁ à C₉ substitué par un groupe phényle ou par un groupe (alkyle en C₁ à C₄)₁₋₃ phényle, un groupe phényle non substitué, ou un groupe phényle substitué par 1 à 3 groupes alkyles en C₁ à C₄.

6. Composé tel que revendiqué dans au moins l'une des revendications 1 à 5, dans lequel
R⁰ désigne un groupe méthyle,
R¹ désigne un groupe -CH₂-SO₃H,
R² désigne un groupe éthyle,
R³ désigne un atome d'H, ou un groupe méthyle ou méthoxy,
R⁴ désigne un atome d'H,
R⁶ désigne un groupe alkyle non substitué en C₄ à C₉, un groupe alkyle en C₁ à C₄ substitué par un groupe phényle, un groupe alkyle en C₁ à C₄ substitué par un groupe alkylphényle en C₁ à C₄, un groupe phényle non substitué, ou un groupe phényle substitué par un groupe alkyle en C₁ à C₄.

7. Procédé de préparation de composés de formule (I) selon l'une quelconque des revendications 1 à 6, comprenant la réaction du sel tris-diazonium d'une triamine de formule (II), 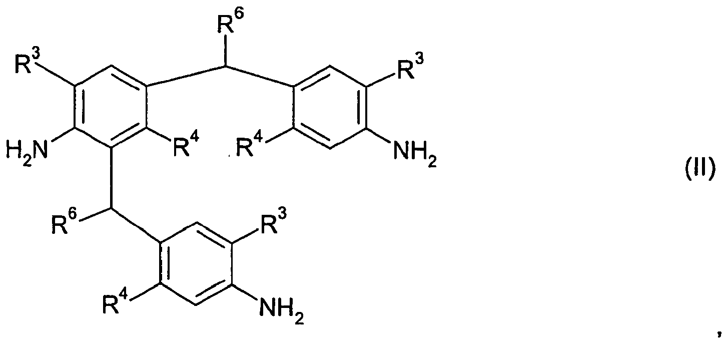 avec trois équivalents d'un composé de formule (III) 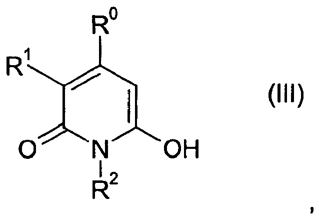 formules dans lesquelles R⁰, R¹, R², R³, R⁴ et R⁶ sont tels que définis dans l'une quelconque des revendications 1 à 6.

8. Utilisation d'un composé selon l'une quelconque des revendications 1 à 6 pour colorer ou imprimer un matériau fibreux contenant des polyamides naturels ou synthétiques ou constitué de polyamides naturels ou synthétiques.

9. Utilisation selon la revendication 8, dans laquelle les polyamides sont de la laine, de la soie ou du nylon.

10. Utilisation selon la revendication 8 ou 9 sous forme de composant jaune dans un procédé de coloration ou d'impression trichrome.
